# EUROPEAN PATENT APPLICATION

(11) **EP 4 459 981 A1**
(43) Date of publication of application: **06.11.2024**
(21) Application number: 21970036.6
(22) Date of filing: 28.12.2021
(51) Int. Cl.: H04N 7/18

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: NAKAZATO, Katsuhisa, Kawasaki-shi, Kanagawa 211-8588 (JP); TANIDA, Hideo, Kawasaki-shi, Kanagawa 211-8588 (JP)
(74) Representative: Hoffmann Eitle
(86) International application number: PCT/JP2021/049000
(87) International publication number: WO 2023/127156

(57) **Abstract**

An information processing apparatus acquires video data that contains target objects that include a person and an object. The information processing apparatus specifies each of relationships between each of the target objects in the acquired video data by inputting the acquired video data to a first machine learning model. The information processing apparatus specifies a behavior of the person in the video data by using a feature of the person included in the acquired video data. The information processing apparatus predicts a future behavior or a state of the person by inputting the specified behavior of the person and the specified relationships to a second machine learning model.

## Description

### TECHNICAL FIELD

The present invention relates to an information processing program, an information processing method, and an information processing apparatus.

### BACKGROUND ART

A behavior recognition technique for recognizing a behavior of a person from video data has been known. For example, a technique of recognizing a motion or a behavior made by a person from the video data captured by a camera or the like, using skeleton information on the person in the video data has been known. In recent years, for example, with the spread of self-checkout machines in supermarkets and convenience stores and the spread of surveillance cameras in schools, trains, public facilities, or the like, introduction of behavior recognition for persons has been advanced.

### CITATION LIST

### PATENT DOCUMENT

Patent Document 1: International Publication Pamphlet No. WO 2019/049216

### SUMMARY OF INVENTION

### TECHNICAL PROBLEM

However, the behavior of the person recognized by the behavior recognition technique described above indicates a current or past behavior made by the person. Therefore, it is sometimes too late to take measures after recognizing that the person has made a predetermined behavior.

In one aspect, an object is to provide an information processing program, an information processing method, and an information processing apparatus that can detect a situation that involves taking measures beforehand from video data.

### SOLUTION TO PROBLEM

In a first idea, an information processing program causes a computer to execute processing including: acquiring video data that contains target objects that include a person and an object; specifying each of relationships between each of the target objects in the acquired video data by inputting the acquired video data to a first machine learning model; specifying a behavior of the person in the video data by using a feature of the person included in the acquired video data; and predicting a future behavior or a state of the person by inputting the specified behavior of the person and the specified relationships to a second machine learning model.

### ADVANTAGEOUS EFFECTS OF INVENTION

According to one embodiment, a situation that involves taking measures beforehand may be detected from video data.

### BRIEF DESCRIPTION OF DRAWINGS

FIG. 1 is a diagram illustrating an overall configuration example of a behavior prediction system according to a first embodiment.
FIG. 2 is a diagram for explaining an information processing apparatus that implements behavior prediction according to the first embodiment.
FIG. 3 is a diagram for explaining a specific example of the behavior prediction.
FIG. 4 is a functional block diagram illustrating a functional configuration of the information processing apparatus according to the first embodiment.
FIG. 5 is a diagram illustrating an example of expression recognition rules.
FIG. 6 is a diagram illustrating an example of a higher-order behavior specification rule.
FIG. 7 is a diagram illustrating an example of a behavior prediction model.
FIG. 8 is a diagram for explaining training data.
FIG. 9 is a diagram for explaining machine learning of a relationship model.
FIG. 10 is a diagram for explaining generation of a skeleton recognition model.
FIG. 11 is a diagram for explaining an example of generating an expression recognition model.
FIG. 12 is a diagram illustrating a camera arrangement example.
FIG. 13 is an explanatory diagram for explaining a movement of a marker.
FIG. 14 is a diagram for explaining an example of generating the higher-order behavior specification rule.
FIG. 15 is a diagram for explaining an example of generating a Bayesing network that is a behavior prediction model.
FIG. 16 is a diagram for explaining specification of a relationship.
FIG. 17 is a diagram for explaining specification of a relationship by human object interaction detection (HOID).
FIG. 18 is a diagram for explaining a specific example of specifying a current behavior of a person.
FIG. 19 is a diagram for explaining another example of specifying a current behavior of the person.
FIG. 20 is a diagram for explaining behavior prediction for a person.
FIG. 21 is a diagram for explaining behavior prediction for a person by a Bayesian network.
FIG. 22 is a flowchart illustrating a flow of behavior prediction processing.
FIG. 23 is a diagram for explaining a solution example to which behavior prediction related to a person and an object is applied.
FIG. 24 is a diagram for explaining a solution example to which behavior prediction related to a person and a person is applied.
FIG. 25 is a diagram for explaining a hardware configuration example.

### DESCRIPTION OF EMBODIMENTS

Hereinafter, embodiments of an information processing program, an information processing method, and an information processing apparatus disclosed in the present application will be described in detail with reference to the drawings. Note that these embodiments do not limit the present invention. In addition, the embodiments can be appropriately combined with each other unless otherwise contradicted.

### [First Embodiment]

### <Overall Configuration>

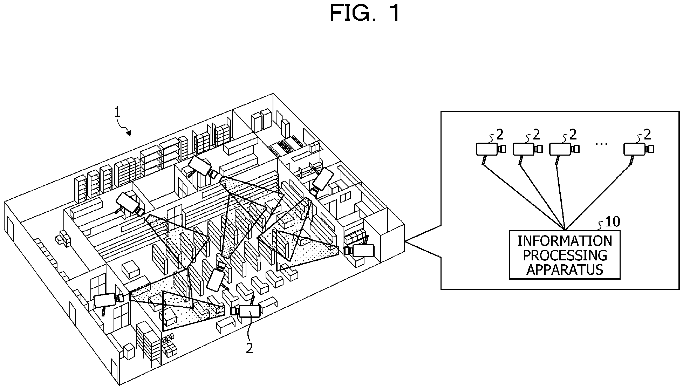

FIG. 1 is a diagram illustrating an overall configuration example of a behavior prediction system according to a first embodiment. As illustrated in FIG. 1, this behavior prediction system includes a store 1 that is an example of a space, a plurality of cameras 2 that are installed in locations different from each other in the store 1, and an information processing apparatus 10 that conducts analysis of video data.

Each of the plurality of cameras 2 is an example of a surveillance camera that images a predetermined region in the store 1 and transmits data of a captured video to the information processing apparatus 10. In the following description, the data of the video will be sometimes referred to as "video data". In addition, the video data includes a plurality of time-series frames. A frame number is given to each frame in a time-series ascending order. One frame is image data of a still image captured by the camera 2 at a certain timing.

The information processing apparatus 10 is an example of a computer that analyzes each piece of the image data captured by each of the plurality of cameras 2. Note that each of the plurality of cameras 2 and the information processing apparatus 10 are coupled using various networks such as the Internet and a dedicated line regardless of whether the network is wired or wireless.

In recent years, surveillance cameras have been set not only in the store 1 but also in cities such as platforms of stations, and a variety of services aiming for a safe and secure society have been provided using video data acquired by the surveillance cameras. For example, services that detect occurrence of shoplifting, accidents, jumping suicides, or the like to use the detected occurrences for post-processing, or the like have been provided. However, all of the services currently provided are for post-detection, and it is difficult to say that video data can be effectively utilized in terms of preventive suppression, for example, for signs of shoplifting, a possibility of suspicious persons, signs of disease attacks, signs of dementia, Alzheimer's disease, or the like that are difficult to deduce at first glance.

Thus, in the first embodiment, the information processing apparatus 10 that implements "behavior prediction" for predicting a future behavior or inside of a person by combining "behavior analysis" for analyzing a current expression or behavior of the person and "context sensing" for detecting surrounding environments, objects, and relationships between the surrounding environments and objects will be described.

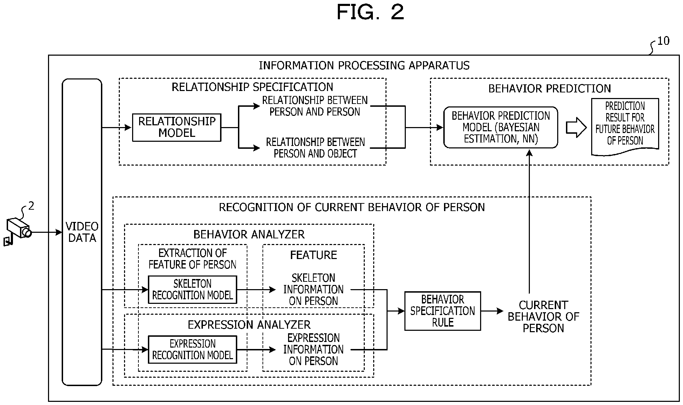

FIG. 2 is a diagram for explaining the information processing apparatus 10 that implements behavior prediction according to the first embodiment. As illustrated in FIG. 2, the information processing apparatus 10 specifies a relationship and recognizes a behavior of a person on video data and performs behavior prediction for the person, using the specified relationship and the recognized behavior.

Specifically, the information processing apparatus 10 acquires video data that contains target objects that include a person and an object. Then, the information processing apparatus 10 specifies each of relationships between each of the target objects in the video data by using a relationship model that specifies the relationships between the target objects in the video data. Meanwhile, the information processing apparatus 10 specifies a current behavior of the person in the video data by using a feature of the person included in the video data. Thereafter, the information processing apparatus 10 predicts a future behavior of the person, such as signs of shoplifting, or a state of the person, such as Alzheimer's, by inputting the specified current behavior of the person and the specified relationships to a machine learning model.

For example, as illustrated in FIG. 2, the information processing apparatus 10 inputs video data to a relationship model and specifies a relationship between a person and a person in the video data or a relationship between a person and an object in the video data.

In addition, the information processing apparatus 10 performs current behavior recognition for the person, using a behavior analyzer and an expression analyzer. Specifically, the behavior analyzer inputs the video data to a trained skeleton recognition model and acquires skeleton information on a person, which is an example of the feature. An expression recognizer inputs the video data to a trained expression recognition model and acquires expression information on a person, which is an example of the feature. Then, the information processing apparatus 10 refers to a predefined behavior specification rule and recognizes the current behavior of the person corresponding to a combination of the specified skeleton information and expression information on the person.

Thereafter, the information processing apparatus 10 inputs the relationship between the person and the person or the relationship between the person and the object, and the current behavior of the person to a behavior prediction model that is an example of the machine learning model using Bayesian estimation, a neural network, or the like and acquires a result of future behavior prediction for the person.

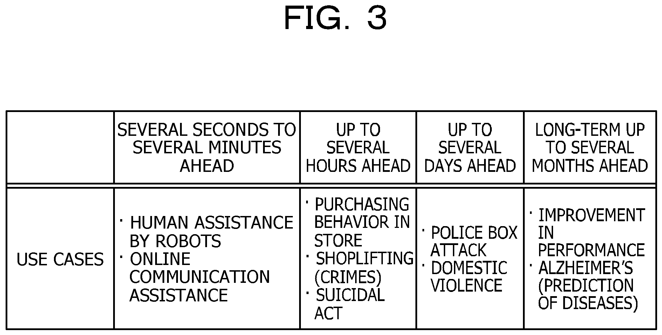

Here, regarding the behavior predicted by the information processing apparatus 10, long-term prediction can be performed from short-term prediction. FIG. 3 is a diagram for explaining a specific example of the behavior prediction. As illustrated in FIG. 3, the behavior prediction predicted by the information processing apparatus includes not only a "behavior" that can be deduced from an appearance of the person, such as a purchasing behavior or shoplifting, but also a "feeling" and a "state" that are difficult to deduce from an appearance of the person and are affected by the inside of the person, such as diseases.

Specifically, the information processing apparatus 10 predicts occurrence, necessity, or the like of "human assistance by robots", "online communication assistance", or the like as very-short-term predictions of several seconds or several minutes ahead. The information processing apparatus 10 predicts occurrence of a sudden event or an event with a small movement amount from a current behavior place, such as a "purchasing behavior in a store", "crimes such as shoplifting or stalking", a "suicidal act", or the like as short-term predictions of several hours ahead. The information processing apparatus 10 predicts occurrence of planned crimes such as "police box attack", "domestic violence", or the like as medium-term predictions of several days ahead. The information processing apparatus 10 predicts occurrence of a possible event (state) that may not be found from an appearance, such as "improvement in performance in study, sales, or the like", "prediction of diseases such as Alzheimer's", or the like as long-term predictions of several months ahead.

In this manner, the information processing apparatus 10 can detect a situation that involves taking measures beforehand from the video data and may achieve provision of a service for aiming a safe and secure society.

### <Functional Configuration>

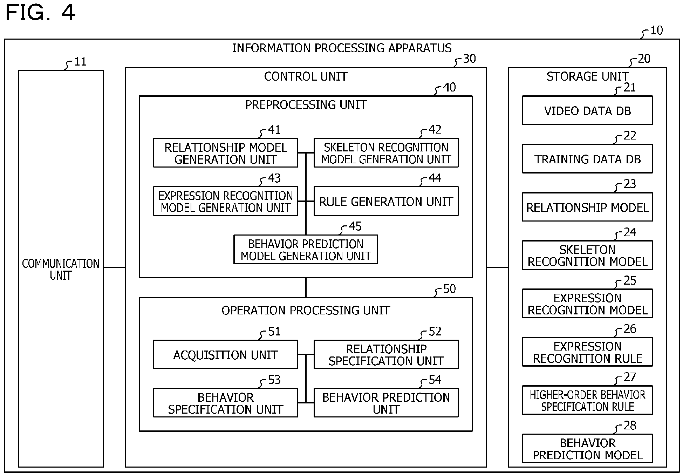

FIG. 4 is a functional block diagram illustrating a functional configuration of the information processing apparatus 10 according to the first embodiment. As illustrated in FIG. 4, the information processing apparatus 10 includes a communication unit 11, a storage unit 20, and a control unit 30.

The communication unit 11 is a processing unit that controls communication with another apparatus and, for example, is implemented by a communication interface or the like. For example, the communication unit 11 receives video data or the like from each camera 2 and outputs a processing result or the like of the information processing apparatus 10 to an apparatus or the like that has been designated in advance.

The storage unit 20 is a processing unit that stores various types of data, programs executed by the control unit 30, and the like and, for example, is implemented by a memory, a hard disk, or the like. This storage unit 20 stores a video data database (DB) 21, a training data DB 22, a relationship model 23, a skeleton recognition model 24, an expression recognition model 25, an expression recognition rule 26, a higher-order behavior specification rule 27, and a behavior prediction model 28.

The video data DB 21 is a database that stores video data captured by each of the plurality of cameras 2 installed in the store 1. For example, the video data DB 21 stores video data for each camera 2 or for each time period in which the video data is captured.

The training data DB 22 is a database that stores graph data and various types of training data used to generate various machine learning models such as the skeleton recognition model 24, the expression recognition model 25, and the behavior prediction model 28. The training data stored here includes supervised training data to which correct answer information is added and unsupervised training data to which no correct answer information is added.

The relationship model 23 is an example of a machine learning model that identifies relationships between each target object included in the video data. Specifically, the relationship model 23 is a model for human object interaction detection (HOID) generated by machine learning for identifying a relationship between a person and a person or a relationship between a person and an object.

For example, when a relationship between a person and a person is specified, a model for HOID that specifies and outputs a first class that indicates a first person and first region information that indicates a region in which the first person appears, a second class that indicates a second person and second region information that indicates a region in which the second person appears, and a relationship between the first class and the second class in response to an input of a frame in the video data is used as the relationship model 23.

In addition, when a relationship between a person and an object is specified, a model for HOID that specifies and outputs a first class that indicates the person and first region information that indicates a region in which the person appears, a second class that indicates the object and second region information that indicates a region in which the object appears, and a relationship between the first class and the second class is used as the relationship model 23.

Note that the relationships mentioned here are not limited to a simple relationship such as "holding", merely as an example, but includes complex relationships such as "holding a product A in the right hand", "stalking a person walking ahead", or "worried about behind". Note that, as the relationship model 23, the above-mentioned two models for HOID may be separately used, or one model for HOID generated so as to identify both of the relationship between a person and a person and the relationship between a person and an object may be used. In addition, although the relationship model 23 is generated by the control unit 30 to be described later, a model generated in advance may be used.

The skeleton recognition model 24 is an example of a machine learning model that generates skeleton information that is an example of a feature of a person. Specifically, the skeleton recognition model 24 outputs two-dimensional skeleton information in response to an input of image data. For example, the skeleton recognition model 24 is an example of a deep learner that estimates two-dimensional joint positions (skeleton coordinates) of the head, wrists, waist, ankles, or the like on two-dimensional image data of a person and recognizes a motion serving as a basis, and a rule defined by a user.

By using this skeleton recognition model 24, the basic motion of the person can be recognized, and positions of the ankles, a direction of the face, and a direction of the body can be acquired. For example, the basic motion includes, walking, running, stopping, or the like. For example, the rule defined by the user is a transition of skeleton information corresponding to each behavior before a product is picked up with the hand. Note that, although the skeleton recognition model 24 is generated by the control unit 30 to be described later, data generated in advance may be used.

The expression recognition model 25 is an example of a machine learning model that generates expression information regarding an expression that is an example of a feature of a person. Specifically, the expression recognition model 25 is a machine learning model that estimates an action unit (AU) that is an approach for decomposing an expression, based on parts and facial expression muscles of the face, and quantifying the expression. This expression recognition model 25 outputs an expression recognition result such as "AU 1: 2, AU 2: 5, AU 4: 1, ..." that expresses a generation intensity (for example, five-step evaluation) of each AU from an AU 1 to an AU 28 set to specify the expression, in response to an input of the image data. Note that, although the expression recognition model 25 is generated by the control unit 30 to be described later, data generated in advance may be used.

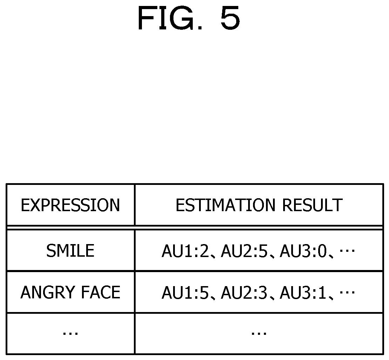

The expression recognition rule 26 is a rule used to recognize an expression, using an output result of the expression recognition model 25. FIG. 5 is a diagram illustrating an example of the expression recognition rules 26. As illustrated in FIG. 5, the expression recognition rule 26 stores an "expression" and an "estimation result" in association with each other. The "expression" is an expression to be recognized, and the "estimation result" is an intensity of each AU from the AU 1 to the AU 28 corresponding to each expression. In the example in FIG. 5, it is indicated that a case of "the AU 1 has an intensity 2, the AU 2 has an intensity 5, the AU 3 has an intensity 0, ..." is recognized as an expression "smile". Note that the expression recognition rule 26 is data registered in advance by an administrator or the like.

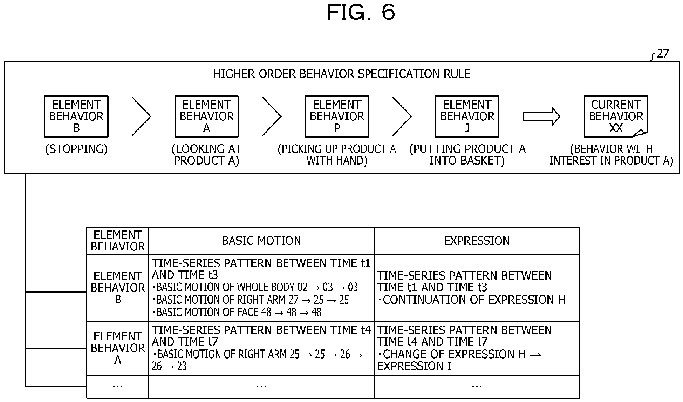

The higher-order behavior specification rule 27 is a rule used to specify a current behavior of a person. FIG. 6 is a diagram illustrating an example of the higher-order behavior specification rule 27. As illustrated in FIG. 6, the higher-order behavior specification rule 27 is a rule that associates the current behavior with a transition of an element behavior performed to specify the current behavior.

In the example in FIG. 6, it is defined to specify a current behavior XX in a case where an element behavior B, an element behavior A, an element behavior P, and an element behavior J are made in this order. For example, the current behavior XX is a "behavior with an interest in a product A", the element behavior B is "stopping", the element behavior A is "looking at the product A", the element behavior P is "picking up the product A with the hand", the element behavior J is "putting the product A into a basket", and the like.

In addition, each element behavior is associated with a basic motion and an expression. For example, regarding the element behavior B, the basic motion is defined as "a basic motion of the whole body transitions to basic motions 02, 03, and 03, a basic motion of the right arm transitions to basic motions 27, 25, and 25, and a basic motion of the face transitions to basic motions 48, 48, and 48, as a time-series pattern between a time t1 and a time t3" and the expression is defined as "an expression H continues as a time-series pattern between the time t1 and the time t3".

Note that the notations such as the basic motion 02 are denoted by identifiers that identify each basic motion for explanation and, for example, correspond to stopping, raising an arm, crouching, or the like. Similarly, the notations such as the expression H are denoted by identifiers that identify each expression for explanation and, for example, correspond to a smile, an angry face, or the like. Note that, although the higher-order behavior specification rule 27 is generated by the control unit 30 to be described later, data generated in advance may be used.

The behavior prediction model 28 is an example of a machine learning model that predicts a future behavior and a state of a person by Bayesian estimation from the basic motion and the expression information. Specifically, the behavior prediction model 28 predicts a future behavior and a state of a person, using the Bayesian network that is an example of a graphical model expressing a causal relationship between variables, as Bayesian estimation.

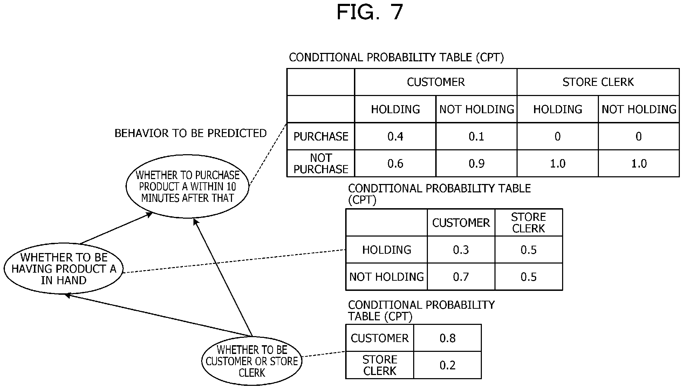

FIG. 7 is a diagram illustrating an example of the behavior prediction model 28. As illustrated in FIG. 7, the behavior prediction model 28 makes a prediction by a Bayesian network that is a kind of graphical model describing a structure of a probability model in a visually easy-to-understand manner and visualizes dependency between a plurality of variables by probability inference.

Here, in the Bayesian network, paths from variables to variables are represented by a directed acyclic graph, and for example, each variable is called a node, a connection between nodes is called a link, a node at the source of the link is called a parent node, and a node at the destination of the link is called child node. Each node of the Bayesian network corresponds to an object or a behavior, a value of each node is a random variable, and each node holds a conditional probability table (CPT) using a probability calculated by Bayesian estimation as quantitative information.

The Bayesian network in FIG. 7 is made up of a node "whether to be a customer or a store clerk", a node "whether to be having a product A in the hand", and a node "whether to purchase the product A within 10 minutes after that", and each node has a CPT. In the node "whether to be a customer or a store clerk", the probability of occurrence of the state of "a customer" is 80%, and the probability of occurrence of the state of "a store clerk" is 20%. In the node "whether to be having the product A in the hand", the probability of occurrence of the state of "holding" is 30%, and the probability of occurrence of the state of "not holding" is 70% in the case of "a customer", and the probability of occurrence of the state of "holding" is 50%, and the probability of occurrence of the state of "not holding" is 50% in the case of "a store clerk".

In this manner, the probability of the child node is assigned only by a preassigned prior probability and the probability of the parent node. In addition, since the probability is a conditional probability, when the probability of a certain node is altered, the probability of another node connected to that node by a link also changes. Using such a feature, behavior prediction is performed by the Bayesian network (behavior prediction model 28). Note that the Bayesian network is generated by the control unit 30 to be described later, but a Bayesian network generated in advance may be used.

Returning to FIG. 4, the control unit 30 is a processing unit that takes control of the entire information processing apparatus 10 and, for example, is implemented by a processor or the like. This control unit 30 includes a preprocessing unit 40 and an operation processing unit 50. Note that the preprocessing unit 40 and the operation processing unit 50 are implemented by an electronic circuit included in a processor, a process executed by a processor, or the like.

### <Preprocessing Unit 40>

The preprocessing unit 40 is a processing unit that generates each model, rules, or the like, using the training data stored in the storage unit 20, prior to an operation of the behavior prediction. The preprocessing unit 40 includes a relationship model generation unit 41, a skeleton recognition model generation unit 42, an expression recognition model generation unit 43, a rule generation unit 44, and a behavior prediction model generation unit 45.

### (Generation of Relationship Model)

The relationship model generation unit 41 is a processing unit that generates the relationship model 23, using the training data stored in the training data DB 22. Here, an example in which a model for HOID using a neural network or the like is generated as the relationship model 23 will be described as an example. Note that the generation of a model for HOID that specifies a relationship between a person and an object will be described merely as an example, but a model for HOID that specifies a relationship between a person and a person can also be generated similarly.

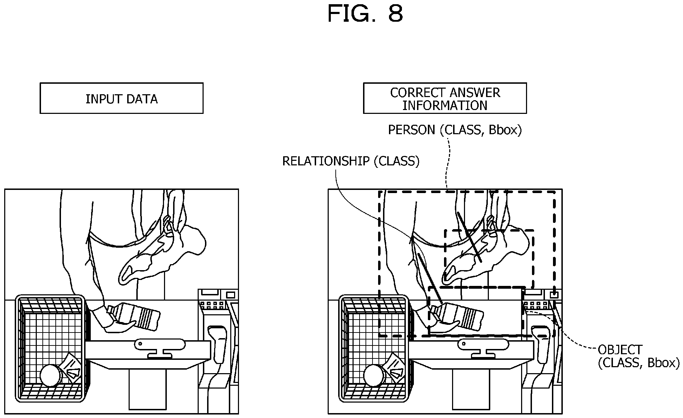

First, training data used for machine learning of the model for HOID will be described. FIG. 8 is a diagram for explaining training data. As illustrated in FIG. 8, each piece of the training data includes image data serving as input data and correct answer information set for the image data.

The correct answer information is set with a class (first class) of a person to be detected, a class (second class) of an object to be purchased or manipulated by the person, a relationship class indicating interaction between the person and the object, and a bounding box (Bbox: object region information) indicating a region of each class. In other words, information regarding the object grabbed by the person is set as the correct answer information. Note that the interaction between the person and the object is an example of a relationship between a person and an object. In addition, in a case of being used to specify a relationship between a person and a person, a class indicating the other person is used as the second class, region information on the other person is used as the region information on the second class, and a relationship between the person and the person is used as the relationship class.

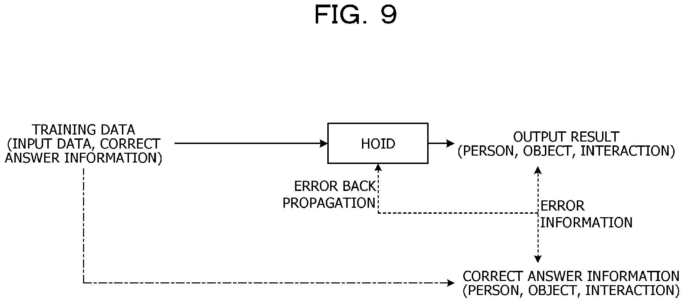

Next, machine learning of the model for HOID using training data will be described. FIG. 9 is a diagram for explaining machine learning of the relationship model 23. As illustrated in FIG. 9, the relationship model generation unit 41 inputs training data to the model for HOID and acquires an output result of the model for HOID. This output result includes the class of the person, the class of the object, the relationship (interaction) between the person and the object, and the like detected by the model for HOID. Then, the relationship model generation unit 41 calculates error information between the correct answer information in the training data and the output result of the model for HOID and performs machine learning of the model for HOID by an error back propagation so as to reduce the error. Note that the generation of the model for HOID is merely an example, and other approaches can be used. The model can also be manually generated by an administrator or the like.

### (Generation of Skeleton Recognition Model 24)

The skeleton recognition model generation unit 42 is a processing unit that generates the skeleton recognition model 24, using training data. Specifically, the skeleton recognition model generation unit 42 generates the skeleton recognition model 24 through supervised training using the training data with the correct answer information (label).

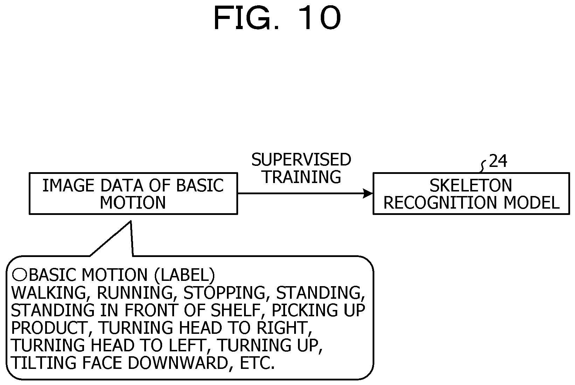

FIG. 10 is a diagram for explaining generation of the skeleton recognition model 24. As illustrated in FIG. 10, the skeleton recognition model generation unit 42 inputs image data of a basic motion to which a basic motion label is given, to the skeleton recognition model 24, and performs machine learning of the skeleton recognition model 24 so as to reduce an error between the output result of the skeleton recognition model 24 and the label. The image data includes skeleton information indicating positions of a plurality of joints of a person. For example, the skeleton recognition model 24 is a neural network. The skeleton recognition model generation unit 42 alters a parameter of the neural network by performing machine learning of the skeleton recognition model 24. The skeleton recognition model 24 inputs an explanatory variable that is image data (for example, image data of a person making a motion of the basic motion) to the neural network. Then, the skeleton recognition model 24 generates a machine learning model of which a parameter of the neural network has been altered so as to reduce an error between the output result output by the neural network and the correct answer data that is a basic motion label.

Note that, as training data, each piece of the image data to which "walking", "running", "stopping", "standing", "standing in front of a shelf", "picking up a product", "turning the head to the right", "turning the head to the left", "turning up", "tilting the head downward", or the like is added as the "label" can be used. Note that the generation of the skeleton recognition model 24 is merely an example, and other approaches can be used. In addition, as the skeleton recognition model 24, behavior recognition disclosed in Japanese Laid-open Patent Publication No. 2020-71665 and Japanese Laid-open Patent Publication No. 2020-77343 can also be used.

### (Generation of Expression Recognition Model 25)

The expression recognition model generation unit 43 is a processing unit that generates the expression recognition model 25, using training data. Specifically, the expression recognition model generation unit 43 generates the expression recognition model 25 through supervised training using the training data with the correct answer information (label).

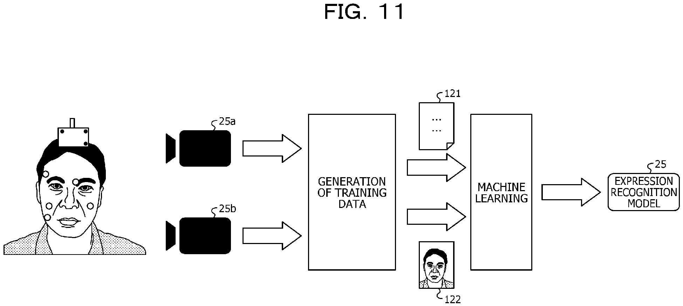

Here, generation of the expression recognition model 25 will be described with reference to FIGs. 11 to 13. FIG. 11 is a diagram for explaining an example of generating the expression recognition model 25. As illustrated in FIG. 11, the expression recognition model generation unit 43 generates training data and performs machine learning on image data captured by each of a red-green-blue (RGB) camera 25a and an infrared (IR) camera 25b.

As illustrated in FIG. 11, first, the RGB camera 25a and the IR camera 25b are directed to the face of a person to which a marker is attached. For example, the RGB camera 25a is a general digital camera and receives visible light to generate an image. In addition, for example, the IR camera 25b senses infrared rays. Furthermore, the marker is, for example, an IR reflection (retroreflection) marker. The IR camera 25b is capable of performing motion capture by using the IR reflection by the markers. In addition, in the following description, a person to be captured will be referred to as a subject.

In training data generation processing, the expression recognition model generation unit 43 acquires image data captured by the RGB camera 25a and a result of the motion capture by the IR camera 25b. Then, the expression recognition model generation unit 43 generates an AU generation intensity 121 and image data 122 obtained by deleting a marker from the captured image data through image processing. For example, the generation intensity 121 may be data in which each AU generation intensity is expressed with the five-step evaluation from A to E and annotation is performed as "AU 1: 2, AU 2: 5, AU 4: 1, ... " .

In machine learning processing, the expression recognition model generation unit 43 performs machine learning, using the image data 122 and the AU generation intensity 121 output from the training data generation processing, and generates the expression recognition model 25 used to estimate the AU generation intensity from the image data. The expression recognition model generation unit 43 can use the AU generation intensity as a label.

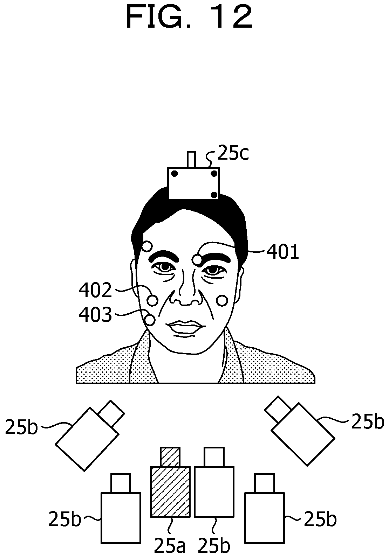

Here, camera arrangement will be described with reference to FIG. 12. FIG. 12 is a diagram illustrating a camera arrangement example. As illustrated in FIG. 12, a plurality of IR cameras 25b may form a marker tracking system. In that case, the marker tracking system may detect a position of the IR reflection marker by stereo imaging. In addition, it is assumed that a relative positional relationship between each of the plurality of IR cameras 25b be corrected in advance through camera calibration.

Furthermore, a plurality of markers is attached to the face of the subject to be imaged so as to cover the AU 1 to the AU 28. Positions of the markers change according to a change in expression of the subject. For example, a marker 401 is arranged near the root of the eyebrow. In addition, a marker 402 and a marker 403 are arranged near the nasolabial line. The markers may be arranged on the skin corresponding to movements of one or more AUs and facial expression muscles. Furthermore, the markers may be arranged to exclude a position on the skin where a texture change is larger due to wrinkles or the like.

Moreover, the subject wears an instrument 25c to which a reference point marker is attached outside the contour of the face. It is assumed that a position of the reference point marker attached to the instrument 25c do not change even when the expression of the subject changes. Accordingly, the expression recognition model generation unit 43 can detect a positional change of the marker attached to the face, based on a change in the position relative to the reference point marker. In addition, by setting the number of the reference point markers to be equal to or more than three, the expression recognition model generation unit 43 can specify a position of the marker in a three-dimensional space.

The instrument 25c is, for example, a headband. In addition, the instrument 25c may be a virtual reality (VR) headset, a mask made of a hard material, or the like. In that case, the expression recognition model generation unit 43 can use a rigid surface of the instrument 25c as the reference point marker.

Note that, when the IR camera 25b and the RGB camera 25a perform imaging, the subject changes his or her expression. This enables to acquire, as an image, how the expression changes as time passes. In addition, the RGB camera 25a may capture a moving image. A moving image may be regarded as a plurality of still images arranged in time series. Furthermore, the subject may change the expression freely, or may change the expression according to a predefined scenario.

Note that the AU generation intensity can be determined according to a marker movement amount. Specifically, the expression recognition model generation unit 43 can determine a generation intensity, based on the marker movement amount calculated based on a distance between a position preset as a determination criterion and the position of the marker.

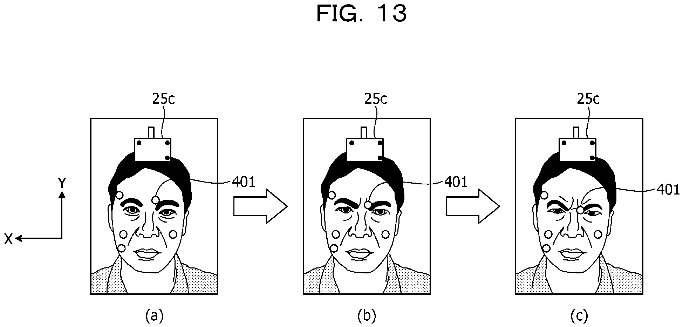

Here, a movement of a marker will be described with reference to FIG. 13. FIG. 13 is an explanatory diagram for explaining a movement of a marker. In FIG. 13, (a), (b), and (c) are images captured by the RGB camera 25a. In addition, it is assumed that the images be captured in order of (a), (b), and (c) . For example, (a) is an image when the subject is expressionless. The expression recognition model generation unit 43 can regard the positions of markers in the image in (a) as reference positions at which the movement amount is zero. As illustrated in FIG. 13, the subject has an expression of drawing his/her eyebrows. At this time, the position of the marker 401 moves downward as the expression changes. At that time, the distance between the position of the marker 401 and the reference point marker attached to the instrument 25c increases.

In this manner, the expression recognition model generation unit 43 specifies image data in which a certain expression of the subject is imaged and an intensity of each marker at the time of that expression and generates training data having an explanatory variable "image data" and an objective variable "an intensity of each marker". Then, the expression recognition model generation unit 43 generates the expression recognition model 25 through supervised training using the generated training data. For example, the expression recognition model 25 is a neural network. The expression recognition model generation unit 43 alters a parameter of the neural network by performing machine learning of the expression recognition model 25. The expression recognition model 25 inputs the explanatory variable to the neural network. Then, the expression recognition model 25 generates a machine learning model of which a parameter of the neural network has been altered so as to reduce an error between an output result output from the neural network and correct answer data that is an objective variable.

Note that the generation of the expression recognition model 25 is merely an example, and other approaches can be used. In addition, as the expression recognition model 25, behavior recognition disclosed in Japanese Laid-open Patent Publication No. 2021-111114 can also be used.

### (Generation of Higher-order Behavior Specification Rule 27)

Returning to FIG. 4, the rule generation unit 44 is a processing unit that generates the higher-order behavior specification rule 27, using a past history or the like. Specifically, the rule generation unit 44 generates the higher-order behavior specification rule 27 by specifying transitions of a motion and an expression before a person makes a certain behavior, from a variety of types of video data in the past.

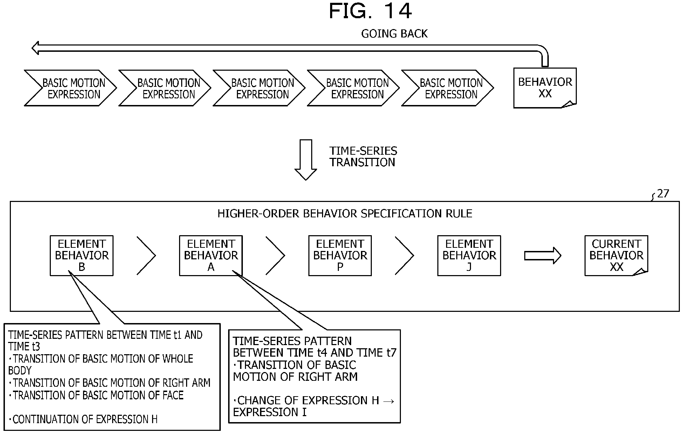

FIG. 14 is a diagram for explaining an example of generating the higher-order behavior specification rule. As illustrated in FIG. 14, the rule generation unit 44 extracts a plurality of pieces of image data in the past that has been acquired before image data where a certain behavior XX was made, by going back a predetermined period of time from the image data. Then, the rule generation unit 44 detects a basic motion and an expression, using a trained model, image analysis, or the like, for each piece of the image data in the past acquired retroactively.

Thereafter, the rule generation unit 44 specifies a transition of an element behavior (transition of the basic motion and transition of the expression) detected before the behavior XX. For example, the rule generation unit 44 specifies "a transition of the basic motion of the whole body, a transition of the basic motion of the right arm, and a transition of the basic motion of the face between the time t1 and the time t3" and "continuation of the expression H between the time t1 and the time t3" as the element behavior B. In addition, the rule generation unit 44 specifies "a transition of the basic motion of the right arm and a change from the expression H to an expression I between a time t4 and a time t7" as the element behavior A.

In this manner, the rule generation unit 44 specifies the order of the element behaviors B, A, P, and J as the transition of the element behavior before the behavior XX. Then, the rule generation unit 44 generates the higher-order behavior specification rule 27 that associates the "behavior XX" with the "transition of the element behaviors B, A, P, and J" and stores the generated higher-order behavior specification rule 27 in the storage unit 20.

Note that the generation of the higher-order behavior specification rule 27 is merely an example, and other approaches can be used. The higher-order behavior specification rule 27 can be manually generated by an administrator or the like.

### (Generation of Behavior Prediction Model 28)

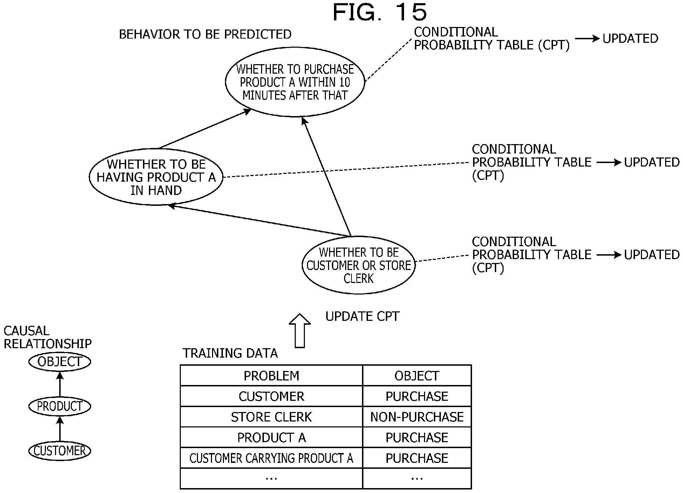

The behavior prediction model generation unit 45 is a processing unit that generates the behavior prediction model 28, using training data. FIG. 15 is a diagram for explaining an example of generating a Bayesing network that is the behavior prediction model 28. As illustrated in FIG. 15, the behavior prediction model generation unit 45 acquires training data ("problem" and "object") generated by aggregating past events, past experiences, and the like. Here, the causal relationship illustrated in FIG. 15 is preset between the customer, the product, and the object.

In such a state, the behavior prediction model generation unit 45 configures a Bayesing network including a node "whether to be a customer or a store clerk", a node "whether to be having the product A in the hand", and a node "whether to purchase the product A within 10 minutes after that" corresponding to the objective behavior to be predicted, in accordance with the causal relationship, and performs training of the Bayesing network in which the CPT of each node is updated, using the training data.

For example, the behavior prediction model generation unit 45 inputs training data "customer, purchase", "store clerk, non-purchase", "product A, purchase", and "customer carrying product A, purchase" to the Bayesing network and performs training of the Bayesing network by updating the CPT of each node by Bayesian estimation. In this manner, the behavior prediction model generation unit 45 generates the behavior prediction model 28 by training the Bayesing network by training using actual results. Note that a variety of known approaches can be adopted for training of the Bayesing network.

In addition, the behavior prediction model 28 is not limited to the Bayesing network, and a neural network or the like can also be used. In this case, the behavior prediction model generation unit 45 performs machine learning of the neural network with "the current behavior and the expression" as an explanatory variable and "whether or not a product has been purchased" as an objective variable. At this time, the behavior prediction model generation unit 45 can also perform machine learning by inputting "the current behavior" and "the expression" that are explanatory variables to different layers. For example, the behavior prediction model generation unit 45 can also input one explanatory variable taken as important to a latter layer of a plurality of hidden layers than the other explanatory variable such that training with a more compressed feature of the one explanatory variable to take the one explanatory variable as more important is performed.

However, the contents set to the explanatory variables are merely an example, and the setting can be altered in any way according to the objective behavior or state. In addition, the neural network is also an example, and a convolutional neural network, a deep neural network (DNN), or the like can be adopted.

### <Operation Processing Unit 50>

Returning to FIG. 4, the operation processing unit 50 is a processing unit that includes an acquisition unit 51, a relationship specification unit 52, a behavior specification unit 53, and a behavior prediction unit 54 and performs behavior prediction processing for predicting a future behavior of a person imaged in video data, using each model and each rule prepared beforehand by the preprocessing unit 40.

The acquisition unit 51 is a processing unit that acquires video data from each camera 2 and stores the acquired video data in the video data DB 21. For example, the acquisition unit 51 may acquire the video data at any time or may acquire the video data periodically from each camera 2.

### (Specification of Relationship)

The relationship specification unit 52 is a processing unit that performs relationship specification processing for specifying a relationship between a person and a person or a relationship between a person and an object imaged in the video data, using the relationship model 23. Specifically, the relationship specification unit 52 inputs every frame to the relationship model 23 for each frame included in the video data and specifies the relationship according to the output result of the relationship model 23. Then, the relationship specification unit 52 outputs the specified relationship to the behavior prediction unit 54.

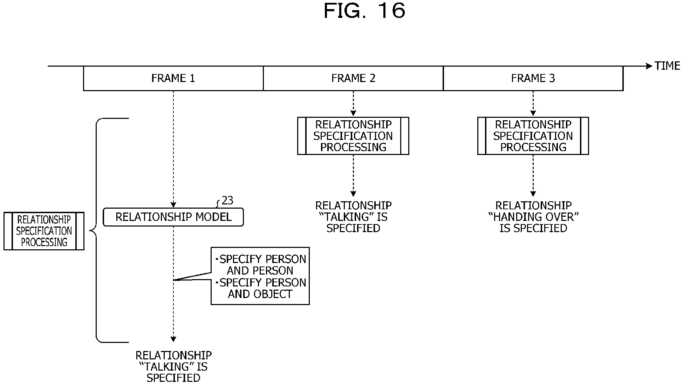

FIG. 16 is a diagram for explaining specification of a relationship. As illustrated in FIG. 16, the relationship specification unit 52 inputs a frame 1 to the machine-learned relationship model 23 and specifies the class of a first person, the class of a second person, and the relationship between the persons. As another example, the relationship specification unit 52 inputs a frame to the machine-learned relationship model 23 and specifies the class of a person, the class of an object, and the relationship between the person and the object. In this manner, the relationship specification unit 52 specifies a relationship between persons or a relationship between a person and an object for each frame, using the relationship model 23.

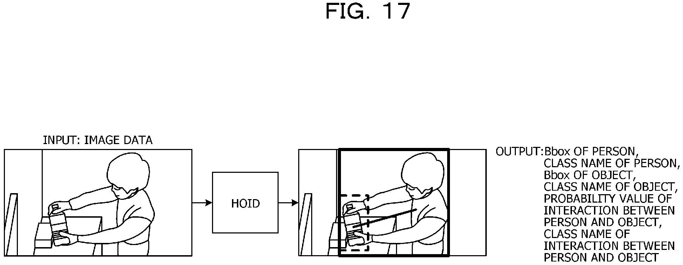

FIG. 17 is a diagram for explaining specification of a relationship by HOID. As illustrated in FIG. 17, the relationship specification unit 52 inputs each frame (image data) included in the video data to HOID (relationship model 23) and acquires an output result of HOID. Specifically, the relationship specification unit 52 acquires the Bbox of the person, the class name of the person, the Bbox of the object, the class name of the object, a probability value of interaction between the person and the object, and the class name of interaction between the person and the object.

As a result, for example, the relationship specification unit 52 specifies a "person (customer)", a "person (store clerk)", and the like as the classes of the persons and specifies a relationship "the store clerk talks with the customer" between the "person (customer)" and the "person (store clerk)". The relationship specification unit 52 specifies a relationship "talking", a relationship "handing over", or the like for each frame, by performing the relationship specification processing described above also on each subsequent frame such as frames 2 and 3.

Note that, as another example, the relationship specification unit 52 inputs a frame to the machine-learned relationship model 23 and specifies the class of a person, the class of an object, and the relationship between the person and the object. For example, the relationship specification unit 52 specifies a "customer" as a class of the person, a "product" as a class of the object, and the like and specifies a relationship "the customer holds the product" between the "customer" and the "product".

### (Specification of Current Behavior)

The behavior specification unit 53 is a processing unit that specifies a current behavior of a person from video data. Specifically, the behavior specification unit 53 acquires skeleton information on each part of the person, using the skeleton recognition model 24, and specifies an expression of the person, using the expression recognition model 25, for each frame in the video data. Then, the behavior specification unit 53 specifies a behavior of the person, using the skeleton information on each part of the person and the expression of the person specified for each frame, and outputs the specified behavior to the behavior prediction unit 54.

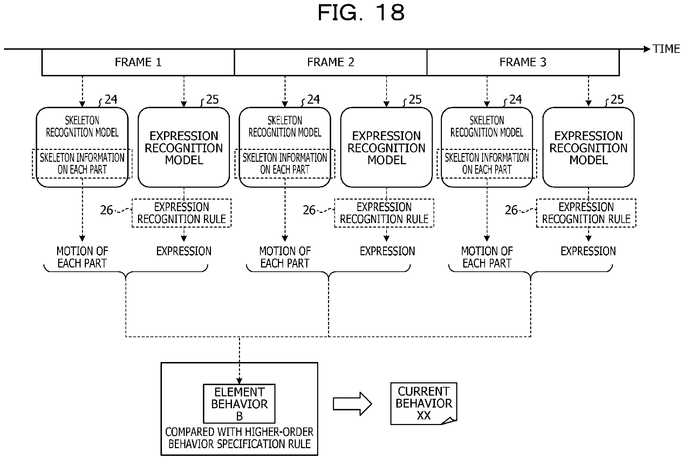

FIG. 18 is a diagram for explaining a specific example of specifying a current behavior of a person. As illustrated in FIG. 18, the behavior specification unit 53 inputs the frame 1 that is image data to the skeleton recognition model 24 and the expression recognition model 25. The skeleton recognition model 24 generates the skeleton information on each part in response to the input of the frame 1 and outputs a motion of each part in accordance with the skeleton information on each part. For example, the behavior specification unit 53 can acquire motion information on each part, such as "face: facing forward, arm: raising, foot: walking, ...", by using the skeleton recognition model 24. In addition, the expression recognition model 25 outputs each AU generation intensity "AU 1: 2, AU 2: 5, AU 4: 1, ..." of the AU 1 to the AU 28 as an expression recognition result in response to the input of the frame 1. Then, the behavior specification unit 53 collates the expression recognition result with the expression recognition rule 26 and specifies an expression "smile" or the like.

The behavior specification unit 53 performs the specification processing described above also on each subsequent frame such as the frames 2 and 3 and specifies the motion information on each part and an expression of a person imaged in the frame, for each frame.

Then, the behavior specification unit 53 specifies a transition of the motion of each part and a transition of the expression of the person, by performing the specification processing described above on each frame. Thereafter, the behavior specification unit 53 compares the transition of the motion of each part and the transition of the expression of the person with each element behavior of the higher-order behavior specification rule 27 and specifies the element behavior B.

Moreover, the behavior specification unit 53 specifies a transition of an element behavior by repeating the specification of an element behavior from the video data. Then, the behavior specification unit 53 can specify the current behavior XX of the person imaged in the video data by comparing the transition of the element behavior with the higher-order behavior specification rule 27.

Note that, in the example in FIG. 18, an example has been described in which both of the motion of each part and the expression are specified for each frame. However, the embodiment is not limited to this. For example, since the expression of the person is affected by an inner change of the person, an expression when a certain behavior is taken is not necessarily an expression that represents the inside at the time of that behavior. That is, in a case where a certain behavior is taken and the expression then changes, the expression often changes before and after the certain behavior is taken. Thus, the behavior specification unit 53 can also specify the expression, using a frame different from the frame used to specify the motion of each part.

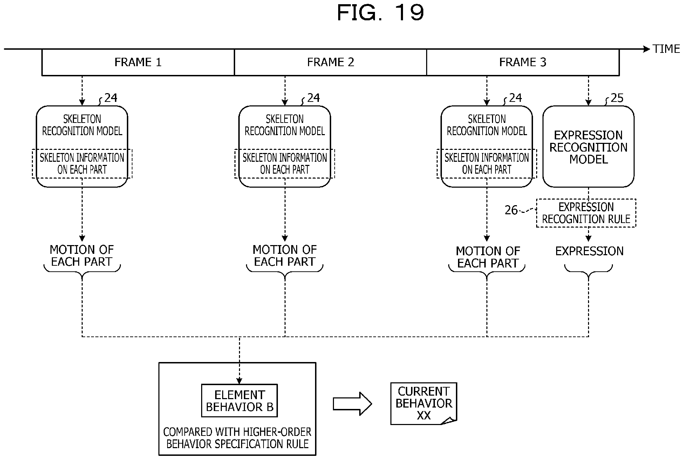

FIG. 19 is a diagram for explaining another example of specifying a current behavior of the person. In FIG. 19, an example will be described in which the frames 1, 2, and 3 are assumed as a single unit of processing, a motion is specified in each frame, and an expression is recognized in the latest frame (the frame 3 in this example). As illustrated in FIG. 19, the behavior specification unit 53 performs the skeleton recognition using the skeleton recognition model 24 on the frames 1, 2, and 3 as in FIG. 18 and specifies a motion of each part for each frame. Meanwhile, the behavior specification unit 53 inputs the frame 3 to the expression recognition model 25 and specifies an expression of the person.

Thereafter, the behavior specification unit 53 specifies an element behavior and specifies a current behavior as in FIG. 18. Note that the example described here is merely an example, and the behavior specification unit 53 may specify the motion of each part in each frame and may recognize the expression in the first frame. In addition, while the behavior specification unit 53 specifies the motion in each frame, the behavior specification unit 53 can also specify an expression formed between frames and a transition of the expression, using a plurality of frames (frames 1 to 3 in FIG. 19), regarding the expression recognition.

### (Future Behavior Prediction)

The behavior prediction unit 54 is a processing unit that performs future behavior prediction for a person, using a current behavior of the person and a relationship. Specifically, the behavior prediction unit 54 inputs the relationship specified by the relationship specification unit 52 and the current behavior of the person specified by the behavior specification unit 53 to the behavior prediction model 28 and predicts a future behavior of the person. Then, the behavior prediction unit 54, for example, transmits a prediction result to an administrator's terminal or displays a prediction result on a display or the like.

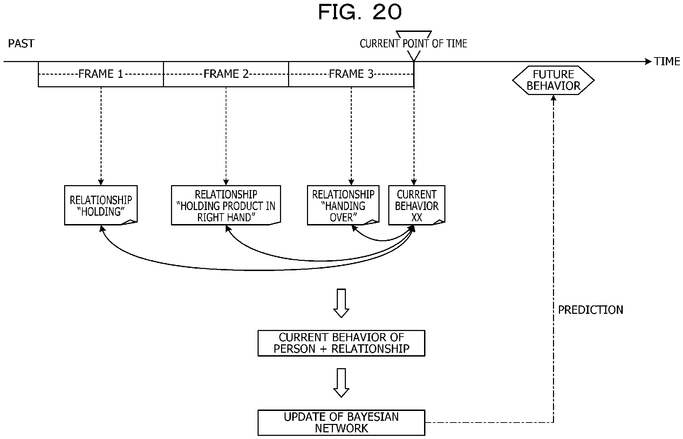

FIG. 20 is a diagram for explaining behavior prediction for a person. As illustrated in FIG. 20, the behavior prediction unit 54 acquires, at the point of time of the frame 1, a relationship "holding" specified at that point of time, acquires, at the point of time of the frame 2, a relationship "holding a product in the right hand" specified at that point of time, and acquires, at the point of time of the frame 3, a relationship "holding" and the current behavior XX specified at that point of time. Then, the behavior prediction unit 54 predicts the behavior of the person by updating the Bayesian network, using the latest relationship and the current behavior XX. Note that the relationship indicated here is merely an example, and in a case where the model for HOID is used, a relationship that can specify "who is doing what and how" such as "the person A holds the product B" is specified.

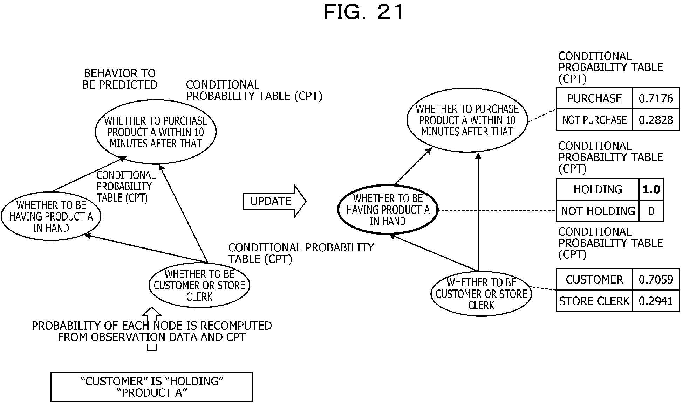

FIG. 21 is a diagram for explaining behavior prediction for a person by the Bayesian network. As illustrated in FIG. 21, in a case where observation data "a person (customer) is holding the product A" is specified as the relationship and the current behavior of the person, the behavior prediction unit 54 recomputes the probability of each node from the observation data and the CPTs. Here, the probability is bidirectionally updated by the influence of the node confirmed by the observation data. In addition, there may be a node that is not allowed to be confirmed from the observation data. In the example in FIG. 21, it is confirmed from the observation data that the product A is being held.

As a result, the behavior prediction unit 54 calculates a probability (customer: 0.7059, store clerk: 0.2941) for the node "whether to be a customer or a store clerk", a probability (customer: 1.0, store clerk: 0) for the node "whether to be having the product A in the hand", and a probability (purchase: 0.7276, not purchase: 0.2824) for the node "whether to purchase the product A within 10 minutes after that".

Then, the behavior prediction unit 54 selects "customer", "holding", and "purchase" having the higher probability in each node and finally predicts "purchase the product A" as behavior prediction for the person. Note that the CPTs of the Bayesian network in FIGs. 20 and 21 illustrate the CPTs in FIG. 7 in a simplified manner for explanation, but these CPTs are the same information.

In addition, in FIG. 20, an example has been described in which the behavior prediction unit 54 performs behavior prediction, using the current behavior and the latest expression. However, the embodiment is not limited to this. As described above, since the expression of the person is largely affected by an inner change of the person, the latest behavior does not necessarily represent the current expression. Accordingly, as illustrated in FIG. 20, the behavior prediction unit 54 can also perform behavior prediction, using the current behavior specified according to the latest frame 3 and at least one relationship recognized up to the frame 3 or a change in the relationship from the frame 1 to the frame 3.

At this time, in a case where the current behavior is specified in a first frame that is an example of image data at a certain time and the relationship is specified in a second frame, the behavior prediction unit 54 determines whether or not the second frame is detected within a preset range of the number of frames or time from the point of time when the first frame was detected. Then, in a case where it is determined that the second frame is detected within the preset range, the behavior prediction unit 54 predicts a future behavior or a state of the person, based on the behavior of the person included in the first frame and the relationship included in the second frame.

That is, the behavior prediction unit 54 predicts the future behavior or the state of the person, using the current behavior and the relationship detected at timings that are close to some extent. Note that the preset range can be set in any way, and any one of the current behavior and the relationship may be specified first.

### <Flow of Processing>

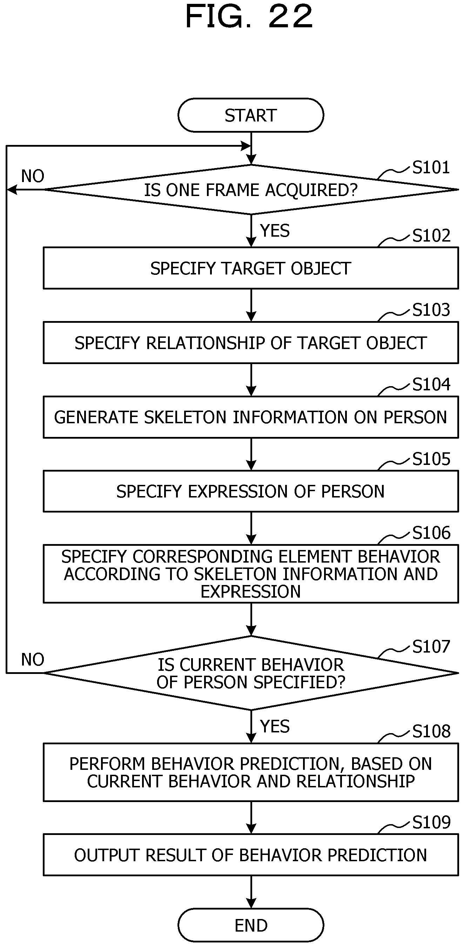

FIG. 22 is a flowchart illustrating a flow of the behavior prediction processing. Note that, here, it is assumed that preprocessing has been completed. As illustrated in FIG. 22, when acquiring one frame (S101: Yes), the operation processing unit 50 inputs the frame to the relationship model 23, specifies a target object imaged in the frame, based on the output result of the relationship model 23 (S102), and specifies a relationship of the target object (S103).

Then, the operation processing unit 50 inputs the frame to the skeleton recognition model 24 and acquires the skeleton information on a person indicating a motion of each part, for example (S104). Note that the operation processing unit 50 omits S104 in a case where no person is imaged in the frame in S103.

In addition, the operation processing unit 50 inputs the frame to the expression recognition model 25 and specifies an expression of a person from the output result and the expression recognition rule 26 (S105). Note that the operation processing unit 50 omits S105 in a case where no person is imaged in the frame in S103.

Thereafter, the operation processing unit 50 specifies the corresponding element behavior from the higher-order behavior specification rule 27, using the skeleton information and the expression of the person (S106). Here, in a case where the current behavior of the person is not specified (S107: No), the operation processing unit 50 repeats S101 and the subsequent steps on a next frame.

On the other hand, in a case where the current behavior of the person is specified (S107: Yes), the operation processing unit 50 updates the Bayesian network, using the current behavior and the relationship that has been already specified, to predict a future behavior of the person (S108). Thereafter, the operation processing unit 50 outputs a result of the behavior prediction (S109).

### <Specific Examples>

Next, specific examples of solutions that contribute to achieve a safe and secure society using the behavior prediction by the information processing apparatus 10 described above will be described. Here, a solution using a relationship between a person and an object and a solution using a relationship between a person and a person will be described.

### (Solution Using Relationship between Person and Object)

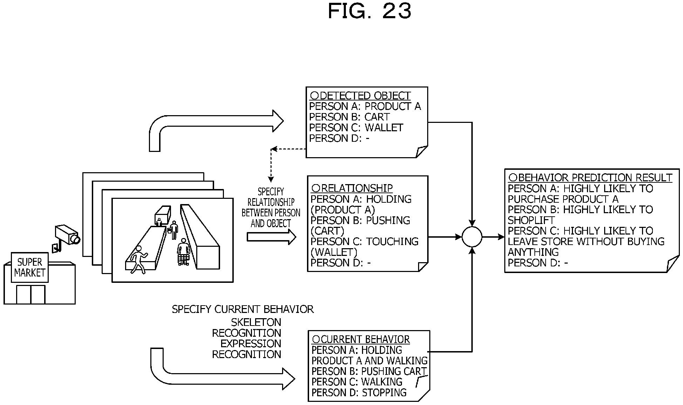

FIG. 23 is a diagram for explaining a solution example to which behavior prediction related to a person and an object is applied. In FIG. 23, an example of behavior prediction using video data captured by a surveillance camera in a supermarket or the like will be described. Note that processing to be described below is performed on one frame or over a plurality of frames in one piece of the video data.

As illustrated in FIG. 23, the information processing apparatus 10 uses the relationship model 23 to specify, from a frame in the video data, information regarding persons and objects "a person A and a product A, a person B and a cart, a person C and a wallet, a person D" and information regarding relationships "a relationship "holding" of the person A with the product A,", "a relationship "pushing" of the person B with the cart", and "a relationship "touching" of the person C with the wallet". Here, since no object is detected for the person D, a relationship is not specified.

In addition, the information processing apparatus 10 performs the skeleton recognition using the skeleton recognition model 24 and the expression recognition using the expression recognition model 25 and, using these recognition results, specifies a current behavior "holding the product A" of the person A, a current behavior "pushing the cart" of the person B, a current behavior "walking" of the person C, and a current behavior "stopping" of the person D.

Then, the information processing apparatus 10 predicts a future behavior of the person A "highly likely to purchase the product A", a future behavior of the person B "highly likely to shoplift", and a future behavior of the person C "highly likely to leave the store without buying anything" through the behavior prediction using the current behaviors and the relationships. Here, since the relationship of the person D is not specified, the person D is excluded from the behavior prediction.

That is, the information processing apparatus 10 specifies a customer who moves in an area of a product shelf that is a predetermined area of the video data and a target product to be purchased by the customer, specifies a type of the behavior (such as looking or holding in one example) of the customer toward the product as a relationship, and predicts a behavior (such as purchasing or shoplifting in one example) regarding the purchase of the product by the customer.

In this manner, the information processing apparatus 10 can utilize the behavior prediction described above for analysis of a purchasing behavior such as a behavior or a route before purchasing, purchasing marketing, or the like. In addition, the information processing apparatus 10 can detect a person, like the person B, who is highly likely to commit a crime such as shoplifting and can utilize the detection for avoidance of crimes by, for example, strengthening monitoring of the person.

### (Solution Using Relationship between Person and Person)

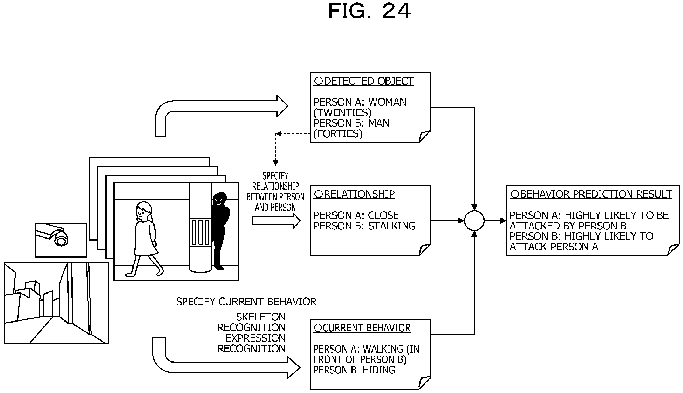

FIG. 24 is a diagram for explaining a solution example to which behavior prediction related to a person and a person is applied. In FIG. 24, an example of behavior prediction using video data captured at night by a surveillance camera on a street or the like will be described. Note that processing to be described below is performed on one frame or over a plurality of frames in one piece of the video data.

As illustrated in FIG. 24, the information processing apparatus 10 uses the relationship model 23 to specify, from a frame in the video data, information regarding persons "a person A (woman: twenties) and a person B (man: forties)" and information regarding relationships "a relationship "close" of the person A with the person B" and "a relationship "staking" of the person B with the person A".

In addition, the information processing apparatus 10 performs the skeleton recognition using the skeleton recognition model 24 and the expression recognition using the expression recognition model 25 and, using these recognition results, specifies a current behavior of the person A "walking in front of the person B" and a current behavior of the person B "hiding".

Then, the information processing apparatus 10 predicts a future behavior of the person A "highly likely to be attacked by the person B" and a future behavior of the person B "highly likely to attack the person A" through the behavior prediction using the current behaviors and the relationships.

That is, the information processing apparatus 10 can predict a criminal act of the person B against the person A according to the relationship "stalking" of the criminal against the victim by assuming the person A as a victim and the person B as a criminal. As a result, the information processing apparatus 10 can detect a place where a crime is highly likely to occur though the behavior prediction described above and take precautionary measures such as dispatching a police officer or the like. In addition, this can be utilized to examine countermeasures such as increasing the number of streetlights at such points.

### <Effects>

As described above, since the information processing apparatus 10 can predict a sign instead of occurrences of accidents and crimes, the information processing apparatus 10 may detect a situation that involves taking measures beforehand from video data. In addition, since the information processing apparatus 10 can perform behavior prediction from video data captured by a general camera such as a surveillance camera, the information processing apparatus 10 may be introduced in an existing system without involving a complicated system configuration or a new apparatus. Furthermore, since the information processing apparatus 10 is introduced in an existing system, a cost may be decreased as compared with new system construction. In addition, the information processing apparatus 10 may predict not only a simple behavior such as being continuous from past and current behaviors but also a complex behavior of a person, such as not being specifiable simply from past and current behaviors. This may allow the information processing apparatus 10 to improve the accuracy of predicting a future behavior of the person.

In addition, since the information processing apparatus 10 may implement behavior prediction using two-dimensional image data without using three-dimensional image data or the like, the information processing apparatus 10 may speed up processing as compared with processing using a laser sensor or the like that has been recently used. Furthermore, in relation to higher-speed processing, the information processing apparatus 10 may be allowed to quickly detect a situation that involves taking measures beforehand.

### [Second Embodiment]

While the embodiments of the present invention have been described above, the present invention may be carried out in diversely different forms apart from the above embodiments.

### <Numerical Values, etc.>

The numerical value examples, the number of cameras, the label names, the rule examples, the behavior examples, the state examples, or the like used in the embodiments described above are merely examples and can be altered in any way. In addition, the processing flow described in each flowchart can be appropriately altered unless otherwise contradicted. Furthermore, in the embodiments described above, the store has been described as an example. However, the embodiments are not limited to this and, for example, can be applied to warehouses, factories, classrooms, train interiors, cabins of airplanes, or the like. Note that the relationship model 23 is an example of a first machine learning model, the behavior prediction model 28 is an example of a second machine learning model, the skeleton recognition model 24 is an example of a third machine learning model, and the expression recognition model 25 is an example of a fourth machine learning model.

### <System>

Pieces of information including the processing procedure, control procedure, specific names, various types of data and parameters described above or illustrated in the drawings can be altered in any way unless otherwise noted.

In addition, each component of each apparatus illustrated in the drawings is functionally conceptual and does not necessarily have to be physically configured as illustrated in the drawings. In other words, specific forms of distribution and integration of each apparatus are not limited to the forms illustrated in the drawings. In other words, the whole or a part of each apparatus can be configured by being functionally or physically distributed or integrated in any units according to various loads, circumstances of use, or the like.

Moreover, all or any part of individual processing functions performed in each apparatus can be implemented by a central processing unit (CPU) and a program analyzed and executed by the CPU or can be implemented as hardware by wired logic.

### <Hardware>

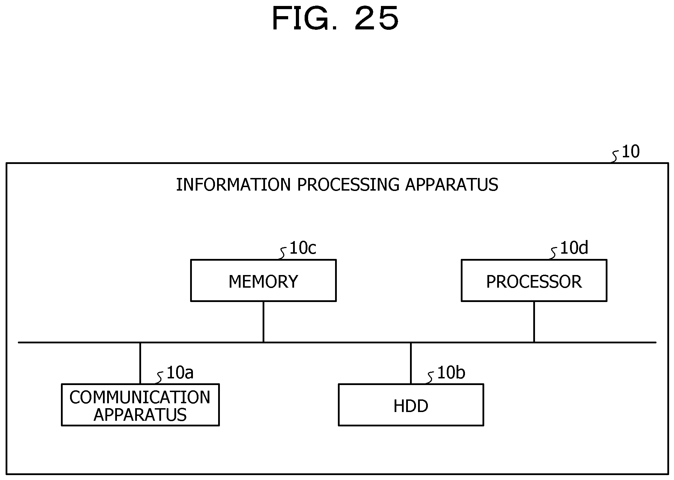

FIG. 25 is a diagram for explaining a hardware configuration example. As illustrated in FIG. 25, the information processing apparatus 10 includes a communication apparatus 10a, a hard disk drive (HDD) 10b, a memory 10c, and a processor 10d. In addition, the respective units illustrated in FIG. 25 are mutually coupled by a bus or the like.

The communication apparatus 10a is a network interface card or the like and communicates with another apparatus. The HDD 10b stores a program that activates the functions illustrated in FIG. 4, and a DB.

The processor 10d reads a program that executes processing similar to the processing of each processing unit illustrated in FIG. 4 from the HDD 10b or the like to load the read program into the memory 10c, thereby activating a process that executes each function described with reference to FIG. 4 or the like. For example, this process executes a function similar to the function of each processing unit included in the information processing apparatus 10. Specifically, the processor 10d reads a program having functions similar to the functions of the preprocessing unit 40, the operation processing unit 50, and the like from the HDD 10b or the like. Then, the processor 10d executes a process that executes processing similar to the processing of the preprocessing unit 40, the operation processing unit 50, and the like.

In this manner, the information processing apparatus 10 works as an information processing apparatus that executes a behavior prediction method by reading and executing a program. In addition, the information processing apparatus 10 can also implement functions similar to the functions of the above-described embodiments by reading the above-mentioned program from a recording medium with a medium reading apparatus and executing the above-mentioned program that has been read. Note that the program mentioned in other embodiments is not limited to being executed by the information processing apparatus 10. For example, the embodiments described above may be similarly applied also to a case where another computer or server executes the program or a case where these computer and server cooperatively execute the program.

This program may be distributed via a network such as the Internet. In addition, this program may be recorded in a computer-readable recording medium such as a hard disk, a flexible disk (FD), a compact disc read only memory (CD-ROM), a magneto-optical disk (MO), or a digital versatile disc (DVD) and may be executed by being read from the recording medium by a computer.

### REFERENCE SIGNS LIST

- 10: Information processing apparatus
- 11: Communication unit
- 20: Storage unit
- 21: Video data DB
- 22: Training data DB
- 23: Relationship model
- 24: Skeleton recognition model
- 25: Expression recognition model
- 26: Expression recognition rule
- 27: Higher-order behavior specification rule
- 28: Behavior prediction model
- 30: Control unit
- 40: Preprocessing unit
- 41: Relationship model generation unit
- 42: Skeleton recognition model generation unit
- 43: Expression recognition model generation unit
- 44: Rule generation unit
- 45: Behavior prediction model generation unit
- 50: Operation processing unit
- 51: Acquisition unit
- 52: Relationship specification unit
- 53: Behavior specification unit
- 54: Behavior prediction unit

## Claims

1. An information processing program for causing a computer to execute processing comprising:
acquiring video data that contains target objects that include a person and an object;
specifying each of relationships between each of the target objects in the acquired video data by inputting the acquired video data to a first machine learning model;
specifying a behavior of the person in the video data by using a feature of the person included in the acquired video data; and
predicting a future behavior or a state of the person by inputting the specified behavior of the person and the specified relationships to a second machine learning model.

2. The information processing program according to claim 1,
wherein the specified behavior of the person
is included in a first frame of a plurality of frames that constitute the video data,
the specified relationships
are included in a second frame of the plurality of frames that constitute the video data,
the predicting includes
determining whether or not the second frame is detected within a preset range of a number of frames or time from a point of time when the first frame was detected, and
in a case where it is determined that the second frame is detected within the preset range of the number of frames or the time, predicting the future behavior or the state of the person, based on the behavior of the person included in the first frame and the relationships included in the second frame.

3. The information processing program according to claim 1,
wherein the specifying the behavior includes:
acquiring a third machine learning model of which a parameter of a neural network has been altered so as to reduce an error between an output result output by the neural network when an explanatory variable that is image data is input to the neural network, and correct answer data that is a label of a motion;
specifying the motion of each part of the person by inputting the video data to the third machine learning model;
acquiring a fourth machine learning model of which the parameter of the neural network has been altered so as to reduce the error between the output result output from the neural network when the explanatory variable that is the image data that includes an expression of the person is input to the neural network, and the correct answer data that indicates an objective variable that is an intensity of each marker of the expression of the person;
generating the intensity of the marker of the person by inputting the video data to the fourth machine learning model, and specifying the expression of the person by using the generated intensity of the marker; and
specifying the behavior of the person in the video data by comparing the specified motion of each part of the person, the specified expression of the person, and a preset rule.

4. The information processing program according to claim 1,
wherein the first machine learning model
is a model for human object interaction detection (HOID) generated by machine learning so as to identify a first class that indicates the person and first region information that indicates a region in which the person appears, a second class that indicates the object and second region information that indicates the region in which the object appears, and the relationships between the first class and the second class, and
the specifying the relationships includes:
inputting the video data to the model for the HOID;
acquiring, as an output of the model for the HOID, the first class and the first region information, the second class and the second region information, and the relationships between the first class and the second class for the person and the object that appear in the video data; and
specifying the relationships between the person and the object, based on an acquired result.

5. The information processing program according to claim 4,
wherein the person is a customer who moves in a predetermined area of the video data,
the object is a target product to be purchased by the customer, the relationships are types of the behavior of the person toward the product, and
the predicting includes predicting the behavior regarding purchase of the product by the customer, as the future behavior or the state of the person.

6. The information processing program according to claim 1,
wherein the first machine learning model
is a model for human object interaction detection (HOID) generated by machine learning so as to identify a first class that indicates a first person and first region information that indicates a region in which the first person appears, a second class that indicates a second person and second region information that indicates the region in which the second person appears, and the relationships between the first class and the second class, and
the specifying the relationships includes:
inputting the video data to the model for the HOID;
acquiring, as an output of the model for the HOID, the first class and the first region information, the second class and the second region information, and the relationships between the first class and the second class for each person that appears in the video data; and
specifying the relationships between the each person, based on an acquired result.

7. The information processing program according to claim 6,
wherein the first person is a criminal,
the second person is a victim,
the relationships are types of the behavior of the first person toward the second person, and
the predicting includes predicting a criminal act of the first person against the second person, as the future behavior or the state of the person.

8. The information processing program according to claim 1,
wherein the predicting includes
predicting the future behavior of the person by Bayesian estimation by using the specified behavior of the person and the specified relationships.

9. An information processing method comprising:
acquiring video data that contains target objects that include a person and an object;
specifying each of relationships between each of the target objects in the acquired video data by inputting the acquired video data to a first machine learning model;
specifying a behavior of the person in the video data by using a feature of the person included in the acquired video data; and
predicting a future behavior or a state of the person by inputting the specified behavior of the person and the specified relationships to a second machine learning model.

10. An information processing apparatus comprising:
a control unit configured to:
acquire video data that contains target objects that include a person and an object;
specify each of relationships between each of the target objects in the acquired video data by inputting the acquired video data to a first machine learning model;
specify a behavior of the person in the video data by using a feature of the person included in the acquired video data; and
predict a future behavior or a state of the person by inputting the specified behavior of the person and the specified relationships to a second machine learning model.
